# EUROPEAN PATENT APPLICATION

(11) **EP 4 737 104 A1**
(43) Date of publication of application: **06.05.2026**
(21) Application number: 24306825.1
(22) Date of filing: 29.10.2024
(51) Int. Cl.: B29D 11/00

(54) **METHOD FOR MANUFACTURING AN OPTICAL ARTICLE FOR CONTROLLING EYE-LENGTH RELATED DISORDERS WITH LIGHT FILTERING FUNCTIONS**

(71) Applicant: Essilor International, 94220 Charenton-Le-Pont (FR)
(72) Inventor: CHIU, Hao-Wen, Holden 01520 (US); CHIU, Alice, Brighton 02135 (US)
(74) Representative: Plasseraud IP

(57) **Abstract**

A method for manufacturing an optical article for controlling eye-length related disorders with light filtering functions comprising the steps of:
- providing (50) a mold (70) comprising a shaped portion (70a) having a concave micro-structured surface and a smooth portion (70b) having a smooth surface defining a cavity (73);
- inserting (52) a light filtering wafer (72) against the concave micro-structured surface (70a);
- injecting (56) an optical thermoplastic material (74) into the cavity (73) of the mold (70) via a filler (76), against a back surface of the light filtering wafer (72);
- applying a packing pressure via the filler (76) to force more optical thermoplastic material (74) into the mold (70) to compensate for a shrinkage of the optical thermoplastic material (74) during cooling;
- opening (58) the mold (70) after the optical thermoplastic material (74) is solidified, thus obtaining an optical article (78) having microstructures (80) on a front surface of the light filtering wafer (72).

## Description

### Technical field

This invention relates to a method for manufacturing an optical article for controlling eye-length related disorders with light filtering functions, for example an optical article that comprises polar or photochromic filtering functions, for myopia control.

### Background information and prior art

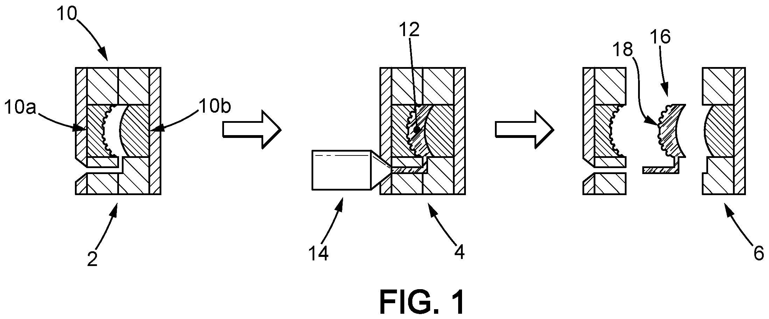

Ophthalmic lenses for controlling eye-length related disorders, for example for controlling myopia, are nowadays produced as clear lenses. Figure 1 shows the step of a known injection molding method for producing such lenses. In a first step 2, a mold 10 comprising a shaped portion 10a having a micro-structured surface being maintained at a first temperature T_{mold,a} and a smooth portion 10b having a smooth surface being maintained at a second temperature T_{mold,b} is provided, wherein the first temperature T_{mold,a} and the second temperature T_{mold,b} are the same or different. In a second step 4, a molten optical thermoplastic material 12 at a melt temperature Tₘₑₗₜ is injected under pressure into the mold 10 through a filler 14, wherein the melt temperature Tₘₑₗₜ is higher than the glass transition temperature *T_{g}* of the optical thermoplastic material 12. The glass transition temperature *T_{g}* is the temperature at which a polymer changes from a hard, glassy state to a soft, rubbery state, or vice versa. Both the first temperature T_{mold,a} and the second temperature T_{mold,b} are lower than the glass transition temperature *T_{g}* of the optical thermoplastic material 12 allowing the molten optical thermoplastic material 12 injected in the second step 4 to cool down and solidify. Finally, in a third step 6, the mold 10 is opened after the optical thermoplastic material 12 is sufficiently solidified to hold its shape, thus allowing obtaining a lens 16 having microstructures (microlenses) 18 on a front convex surface (a micro-structured surface). The micro-structured surface allows obtaining peripheral defocus of light impinging on the retina of a user wearing such lenses, thus controlling the progression of myopia.

In the present of the description reference will be made to a *"lens",* however, other known optical such as wafers or films can be considered.

In the present description reference will be made to controlling myopia, however, other known eye-length related disorders can be considered.

Children are recommended to wear these types of lenses for a minimum of twelve hours a day for getting the best results, and this entails wearing the lens also to attend outdoor activities when strong sunlight may be present, which may lead to a potential risk of photophobia. Furthermore, it is known that extended exposure to UV can result in long term damage to the retina or even cataract over the years. In addition, children may be exposed, during their daily activities, to other potentially damaging light sources such as blue light.

Accordingly, there is the need to provide an innovative method for manufacturing an optical article for controlling eye-length related disorders, such as myopia, that offers at the same time light filtering functions, for example to get protection to the eyes from strong sunlight or to provide extra protection to the eyes through other light filtering functions such as blue cut, chronocut or NIR cut, thus overcoming the problems of the prior art.

### Summary

What is provided herein is a method for manufacturing an optical article for controlling eye-length related disorders with light filtering functions comprising the steps of:
- providing a mold comprising a shaped portion having a concave micro-structured surface and a smooth portion having a smooth surface defining a cavity;
- inserting a light filtering wafer against the concave micro-structured surface;
- injecting an optical thermoplastic material into the cavity of the mold via a filler, against a back surface of the light filtering wafer;
- applying a packing pressure via the filler to force more optical thermoplastic material into the mold to compensate for a shrinkage of the optical thermoplastic material during cooling;
- opening the mold after the optical thermoplastic material is solidified, thus obtaining an optical article having microstructures on a front surface of the light filtering wafer.

In an embodiment, the light filtering wafer comprises a thermoplastic layer and a light filtering layer.

In an embodiment, the light filtering layer is polyvinyl alcohol (PVA) or polyethylene terephthalate.

In an embodiment, the light filtering layer is thermoplastic polyurethane (TPU), polyether block amide (PEBA) or thermoplastic polyol adhesive.

In an embodiment, the light filtering wafer comprises a thermoplastic layer comprising a light filtering dye.

In an embodiment, the light filtering dye is blue cut dye, UV cut dye, color enhancement dye, chronocut dye or NIR cut dye.

In an embodiment, the thermoplastic layer comprises a material selected from the group consisting of polycarbonate, isosorbide copolycarbonate, thermoplastic polyurethane, polyamide, copolyester, polymethyl methacrylate, methyl methacrylate copolymer, polyethylene terephthalate, polyester, polysulfone, polyphenylsulfone, polyetherimide, cyclic olefin copolymer, cyclic olefin polymer, cellulose triacetate, copolymers thereof, and mixtures thereof.

In an embodiment, the light filtering wafer comprises a polarizing wafer, a photochromic wafer, a blue cut wafer, a UV cut wafer, a color enhancement wafer, a chronocut wafer or a NIR cut wafer.

In an embodiment, the optical thermoplastic material is selected from the group consisting of polycarbonate, isosorbide copolycarbonate, thermoplastic polyurethane, polyamide, copolyester, polymethyl methacrylate, methyl methacrylate copolymer, polyethylene terephthalate, polyester, polysulfone, polyphenylsulfone, polyetherimide, cyclic olefin copolymer, cyclic olefin polymer, copolymers thereof, and mixtures thereof.

Also provided herein is an optical article for controlling eye-length related disorders with light filtering functions comprising a finished lens, a semi-finished lens, a wafer or a film.

The aforesaid optical article for controlling eye-length related disorders with light filtering functions can be designed to control myopia of an individual

### Description of the drawings

Further characteristics and advantages of the present invention will become apparent from the following description, provided merely by way of a non-limiting example, with reference to the attached drawings, in which:
Figure 1 shows the step of an injection molding method for producing ophthalmic lenses for controlling eye-length related disorders of the prior art;
Figure 2 shows the step of a wafer injection overmolding method of the prior art;
Figure 3 shows the step of a method for manufacturing an optical article for controlling eye-length related disorders with light filtering functions according to an example of the present invention;
Figure 4 shows a first type of insert used to obtain an optical article according to an embodiment of the present invention;
Figure 5 shows a cross-sectional view of PC/adhesive/PVA/adhesive/PC/PC polarized lens;
Figure 6 shows a cross-sectional view of PC/TPU/PC/PC polarized lens; and
Figure 7 shows a cross-sectional view of PC/PC blue cut lens.

### Detailed description of embodiments

In the description which follows, the drawing figures are not necessarily to scale, and certain features may be shown in generalized or schematic form in the interest of clarity and conciseness or for informational purposes. Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process. To avoid unnecessary details for practicing the invention, the description may omit certain information already known to those skilled in the art.

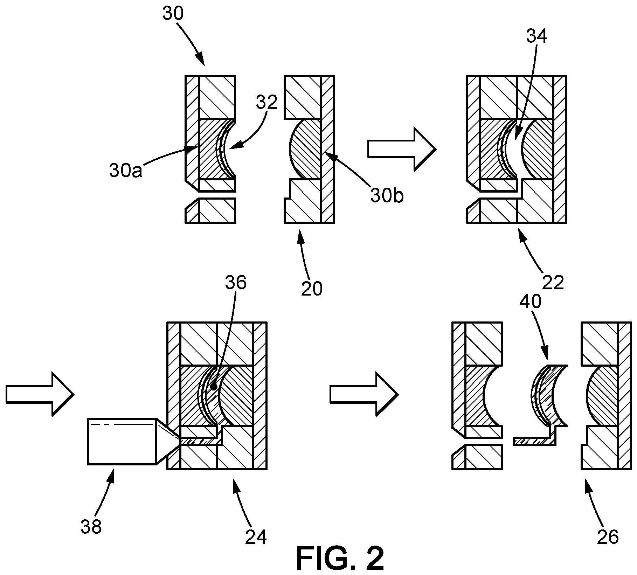

A method for producing typical polarized, photochromic, blue cut or chronocut lenses with smooth surfaces by injecting a molten thermoplastic against a light functional wafer is known and commonly practiced. Figure 2 shows the step of such wafer injection overmolding known method.

In a first step 20, a mold 30 comprising a first portion 30a having a smooth concave surface maintained at a first temperature T_{mold,a} and a second portion 30b having a smooth convex surface maintained at a second temperature T_{mold,b} is provided, wherein the first T_{mold,a} and the second T_{mold,b} are the same or different. A solid light filtering functional wafer 32 is inserted against the smooth concave surface of the first portion 30a of the mold 30. Then, in a next step 22 the mold 30 is closed, thus defining an open space (a cavity) 34 which is filled, in step 24, with a molten optical thermoplastic material 36 at a melt temperature Tₘₑₗₜ injected under pressure through a filler 38, wherein the melt temperature Tₘₑₗₜ is higher than the glass transition temperature *T_{g}* of the optical thermoplastic material 36, which is higher than both the first temperature T_{mold,a} and the second temperature T_{mold,b}. Then, in step 26 the mold 30 is opened after the optical thermoplastic material 36 is fully solidified, thus obtaining a lens with functional wafer 40.

However, as above-explained, for controlling the progression of an eye-length related disorder such as myopia, lenses with a micro-structured surface are needed.

The method for manufacturing an optical article for controlling eye-length related disorders with light filtering functions according to the present invention is a novel in-mold embossing method evolved from the above-described wafer injection overmolding method of the prior art by replacing the smooth concave surface with a micro-structured surface coupled with a set of specifically developed process parameters, to produce an optical article with added light filtering functions. Unlike the injection molding method described in Figure 1 to produce clear myopia control lenses wherein a molten optical thermoplastic material makes direct contact with the shaping surface and fills in the microstructures to achieve good replication fidelity, a solid wafer residing over the micro-structured concave surface prevents such from happening. Therefore, simply following the wafer injection overmolding process of the prior art would be insufficient in achieving an acceptable replication fidelity of the microstructures on the shaping surface.

A rigorously developed injection overmolding process of unique parameters, e.g., melt temperature, mold temperature and injection and packing pressures, together with a carefully constructed functional wafer of a particular thickness is required, to ensure high wafer conformity to the micro-structured surface (the shaped portion of the mold) to achieve optimal embossing fidelity and to retain light filtering efficacy such as polarization efficiency, photochromic transitions, and/or blue cut performances. It is especially important to have a well-balanced process that provides heat and pressure from an optical thermoplastic melt being injected into the mold cavity to soften sufficiently the solid wafer and to emboss effectively the microstructures on the shaping surface onto the wafer surface with the applied pressure, while keeping the light filtering functions of the wafer unaffected by the high heat.

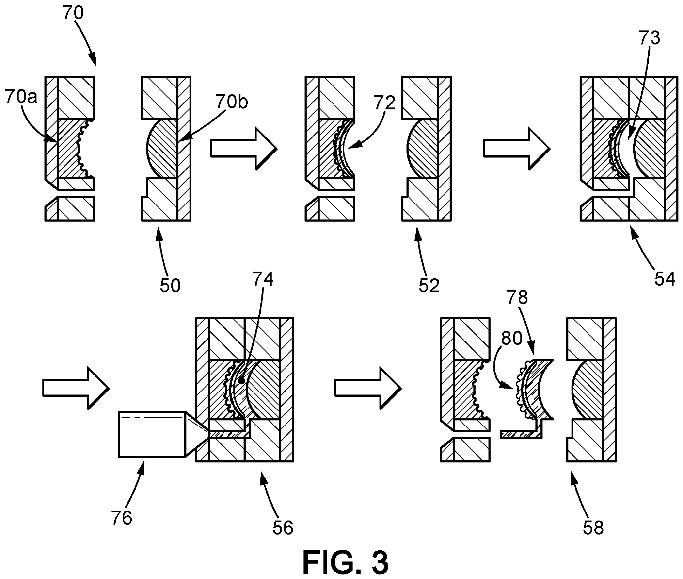

Figure 3 shows the step of a method for manufacturing an optical article for controlling eye-length related disorders with light filtering functions according to an example of the present invention.

In a first step 50, a mold 70 comprising a shaped portion 70a having a concave micro-structured surface being maintained at a first temperature T_{mold,a} and a smooth portion 70b having a convex smooth surface being maintained at a second temperature T_{mold,b} is provided, wherein the first temperature T_{mold,a} and the second temperature T_{mold,b} are the same or different. The shaped portion 70a and the smooth portion 70b define altogether a cavity 73 of the mold 70.

In a second step 52, a light filtering wafer 72, preferably comprising a thermoplastic layer and a light filtering layer, is inserted against the concave micro-structured surface 70a.

Preferably, the thermoplastic layer comprises polycarbonate (PC) and the light filtering layer comprises polyvinyl alcohol (PVA) or polyethylene terephthalate.

Preferably, the thermoplastic layer comprises polycarbonate (PC) and the light filtering layer comprises thermoplastic polyurethane (TPU), polyether block amide (PEBA) or thermoplastic polyol adhesive.

Advantageously, the thermoplastic layer comprises a material selected from the group consisting of polycarbonate, isosorbide copolycarbonate, thermoplastic polyurethane, polyamide, copolyester, polymethyl methacrylate, methyl methacrylate copolymer, polyethylene terephthalate, polyester, polysulfone, polyphenylsulfone, polyetherimide, cyclic olefin copolymer, cyclic olefin polymer, cellulose triacetate, copolymers thereof, and mixtures thereof.

The light filtering wafer 72 is a functional wafer having light filtering functions.

Then, in step 54, the mold 70 is closed.

In next step 56 an optical thermoplastic material 74, preferably polycarbonate (PC), at a melt temperature Tₘₑₗₜ between 250 and 315°C, is injected into the mold 70 through a filler 76 under an injection pressure P_{Injection} to fill a cavity 77 of the closed mold (70). Then, a packing pressure P_{Packing} between 10 and 30000psi is applied to the mold 70 to force more optical thermoplastic material 74 into the cavity 77 to compensate for a shrinkage of the optical thermoplastic material 74 occurring during cooling. The optical thermoplastic material 74 bonds to a back surface of the light filtering wafer 72.

Finally, in a step 58, the mold 70 is opened after the optical thermoplastic material 74 is solidified, thus obtaining an optical article 78 having microlenses 80 on a front surface of the light filtering wafer (film) 72.

The optical thermoplastic material 74 can be selected from the group consisting of polycarbonate, isosorbide copolycarbonate, thermoplastic polyurethane, polyamide, copolyester, polymethyl methacrylate, methyl methacrylate copolymer, polyethylene terephthalate, polyester, polysulfone, polyphenylsulfone, polyetherimide, cyclic olefin copolymer, cyclic olefin polymer, copolymers thereof, and mixtures thereof.

The light filtering wafer 72 with filtering functions can be a polarizing, photochromic, blue cut, UV cut, color enhancement, chronocut or near infrared (NIR) cut wafer.

The optical article 78 comprises at least one of a finished lens, a semi-finished lens, a wafer or a film.

In order to achieve high microstructure replication fidelity on the light filtering wafer 72 using the present method of in-mold embossing, several molding parameters are crucial, namely the light filtering wafer drying temperature, the optical thermoplastic material melt temperature Tₘₑₗₜ, the mold temperature, the packing pressure P_{Packing} and the cooling time (the time of cooling needed for the optical thermoplastic material 74 to solidify to hold its shape before opening the mold 70 at step 58).

Advantageously, the light filtering wafer 72 is dried at 80±5°C for 12±2 hours, then it is placed against the concave micro-structured surface of the shaped portion 70a of the mold 70 and finally the optical thermoplastic material 74 is injected behind it.

For reference, molding parameters to overmold a semi-finished single vision (SFSV) polarized lens (the optical article 78) are shown in Table 1, compared with the molding parameters necessary to mold an SFSV standard ophthalmic lens according to the method of Figure 1.

**Table 1**

| **Parameter** | **Unit** | **76mm SFSV Polar Lens** | **Unit** | **76mm SFSV Standard Lens** |
|---|---|---|---|---|
| **Melt temp** | Deg. F | 505-515 | Deg. F | 505-515 |
| **Mold A temp.** | Deg. F | 265 | Deg. F | 270 |
| **Mold B temp.** | Deg. F | 269 | Deg. F | 267 |
| **Cooling Time** | Second | 270-285 | Second | 240 |
| **Injection Time** | Second | 55 | Second | 60 |
| **Fill Time** | Second | 10 | Second | 10 |
| **Inj. Pack press.** | PSI | 1000-1020 | PSI | 1170 |
| **Inj. Hold press** | PSI | 950-970 | PSI | 1122 |
| **Inj. Velocity 1** | percent, % | 26 | mm/sec | 4 |
| **Inj. Velocity 2, 3, 4** | percent, % | 20-30 | mm/sec | 7 |
| **Inj. Velocity 5** | percent, % | 17-24 | mm/sec | N/A |
| **Cycle time** | Second | 355-370 | Second | 315 |

As shown in Table 1, the polar and standard lenses require different process parameters to attain good optics. For a standard lens, it is essential that the concave microstructures on the concave micro-structured surface of the shaped portion 70a are completely filled, packed, and cooled without any nonuniform shrinkage that alters the asphericity of the design. Molding a polar lens needs to achieve the same results despite the additional light filtering wafer 72 placed between the optical thermoplastic material 74 and the concave micro-structured surface of the shaped portion 70a.

The method of the present invention provides ranges of process parameters coupled with heat/cool cycling of the mold cavity to ensure that a proper replication of the microstructures is achieved and the light filtering efficacy of the light filtering wafer 72 is retained, as above shown.

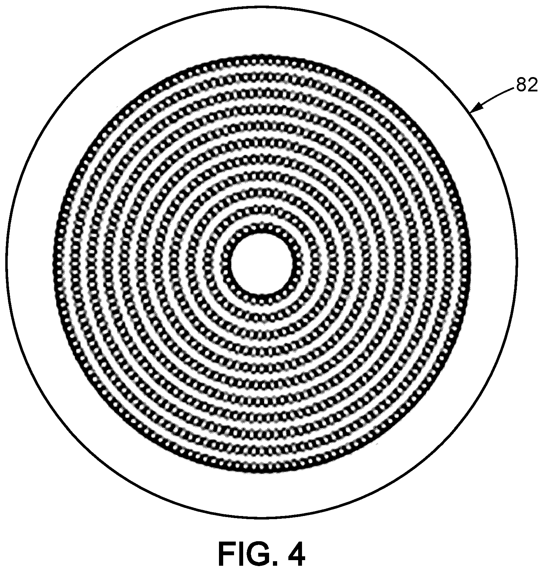

In a first example, a first type of insert (the shaped portion 70a of the mold 70) has been adopted to obtain an optical article 78 as above-disclosed, this first insert having a concave micro-structured surface comprising eleven concentric rings 82 of spherical microlenses with asphericity ranging from 0 to 0.5, as shown in Figure 4.

In a first embodiment of the first example, a polarized lens has been obtained using 1.75 Base PC/adhesive/Polyvinyl alcohol (PVA)/adhesive/PC polar wafer (the functional light filtering wafer 72), overmolded on a nickel phosphorus (NiP) plated steel first insert on a Krauss Maffei machine with a Teijin Panlite polycarbonate (PC) resin (the optical thermoplastic material 74). The polyvinyl alcohol (PVA) layer of the polar wafer contains dichroic dyes that give light polarizing function.

Following the polar lens process in Table 1, the parameters for the design of experiments of this first embodiment are shown in Table 2, wherein A-X, A-100, A-150, B-X, etc. are reference numbers used to identify different tests

**Table 2**

| | Mold Temp (°C) | Melt Temp (°C) | Wafer drying Temp (°C) |
|---|---|---|---|
| A-X | 124 | 265 | 82 |
| A-100 | 124 | 265 | 100 |
| A-150 | 124 | 265 | 150 |
| B-X | 127 | 270 | 82 |
| B-150 | 127 | 270 | 150 |
| C-X | 127 | 275 | 82 |
| C-150 | 127 | 275 | 150 |
| D-X | 130 | 280 | 82 |
| D-150 | 130 | 280 | 150 |

The goals are to determine the preferred temperature for which the light filtering wafer 72 is preheated prior to overmolding, as well as to observe how the combination of higher mold and melt temperatures affect the optics.

Polycarbonate (PC) polar wafers are usually dried at 80±5°C prior to overmolding. Measurements of microlens optics show that preheating wafers at a higher temperature after drying would surprisingly worsen the optics despite being closer to the glass transition temperature of the PC polar wafer. Compared to a clear standard lens, the best optics from the above trial is sample D, produced with the highest mold and melt temperatures.

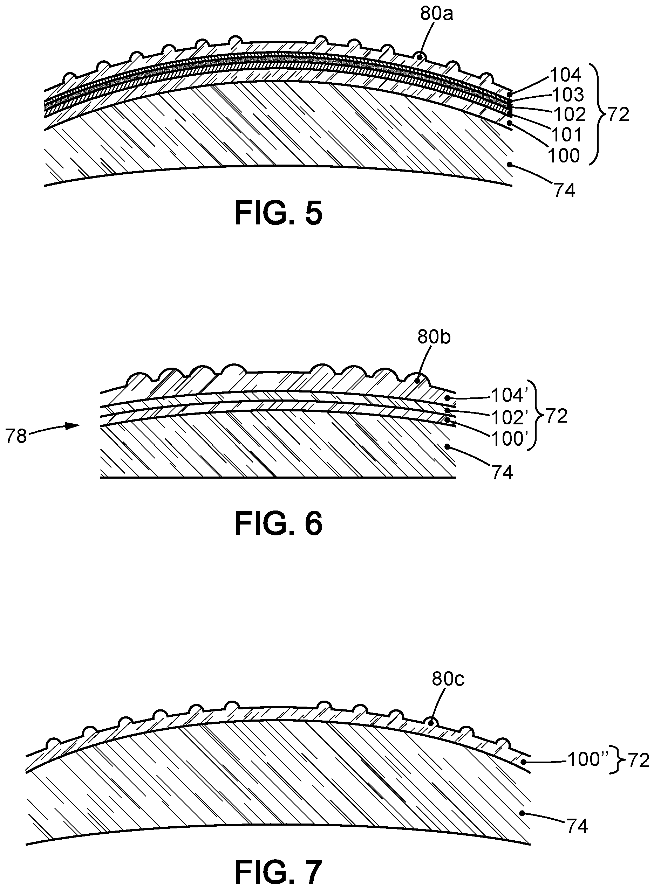

Hence, for the spherical microlens design of the first insert, the preferred temperature ranges for making a polarized myopia control lens (the optical article 78) using a PC/adhesive/PVA/adhesive/PC polar wafer (the light filtering wafer 72) are mold temperature ≥ 125°C, melt temperature ≥ 270°C and drying temperature ≤ 145°C. These temperature ranges give the best replication of the microstructures of the concave surface of the shaped portion 70a on the light filtering wafer 72 (thus obtaining the microlenses 80 on the surface of the light filtering wafer 72) and retain the polarizing efficiency of the light filtering wafer 72. The resulting lens is a PC/adhesive/PVA/adhesive/PC/PC polarized lens, for myopia control, with microlenses 80 on the top PC layer facing outward, as shown in Figure 5.

Figure 5 shows a cross-sectional view of a PC/adhesive/PVA/adhesive/PC/PC polarized lens (the optical article 78) having a PC substrate (the optical thermoplastic material 74) of 10mm, and a light filtering wafer 72 comprising a bottom PC layer 100 of 300 µm, a first adhesive layer 101 of 10 µm, an intermediate PVA polar layer 102 of 30 µm, a second adhesive layer 103 of 10 µm, and a top PC layer 104 of 300 µm having microlenses 80a.

In a second embodiment of the first example, a PC/Thermoplastic polyurethane (TPU)/PC photochromic wafer (the functional light filtering wafer 72) has been used to produce a photochromic lens, wherein the TPU film is an adhesive layer comprising photochromic dyes. Alternatively, a polyether block amide (PEBA) or thermoplastic polyol adhesive can be used instead of the TPU film. For the spherical microstructure design of the first insert, the preferred temperature ranges are mold temperature ≥ 125°C, melt temperature ≥ 270°C and drying temperature ≤ 145°C. These temperature ranges give the best replication of the microstructures of the concave surface of the shaped portion 70a on the functional wafer 72 (thus obtaining the microlenses 80 on the surface of the functional wafer 72) and retain the photochromic performances of the wafer. The resulting lens is a PC/TPU/PC/PC photochromic lens, for myopia control, with microlenses 80 on the top PC layer facing outward, as shown in Figure 6.

Figure 6 shows a cross-sectional view of a PC/TPU/PC/PC photochromic lens (the optical article 78) having a PC substrate (the optical thermoplastic material 74) of 10mm, and a light filtering wafer 72 comprising a bottom PC layer 100' of 250 µm, an intermediate TPU photochromic layer 102' of 50 µm and a top PC layer 104' of 250 µm having microlenses 80b.

Alternatively, the PC/TPU/PC photochromic wafer can comprise adhesive layers placed in-between the layer, i.e., a PC/adhesive/TPU/adhesive/PC photochromic wafer.

In a second example, a second type of insert has been adopted, this second insert having a concave micro-structured surface comprising eleven concentric rings of aspherical microlenses with asphericity greater than 1.0.

The parameters for packing pressure and cooling time for a first embodiment of this second example are shown in Table 3, the packing pressure being applied in two stages and the mold and melt temperatures remaining the same as the ones of the sample D-X of Table 2. This first embodiment of the second example is based on the same light filtering wafer 72 and optical thermoplastic material 74 of the first embodiment of the first example.

**Table 3**

| | Packing 1 (bar) - 10s | Packing 2 (bar) - 55s | Cooling Time (s) |
|---|---|---|---|
| 1-A1 | 90 | 85 | 260 |
| 1-A2 | 90 | 85 | 275 |
| 1-A3 | 90 | 85 | 300 |
| 1-B1 | 80 | 75 | 260 |
| 1-C3 | 100 | 95 | 300 |

The lenses obtained with the second insert have higher microlens powers than the ones obtained with the first insert, as well as higher asphericity ranging from 1 to 1.6. As a result, it has been observed that higher packing pressure is able to conform the light filtering wafer 72 to the insert more forcefully, in which sample C3 gives the best microlens optics of all with only about 1 or less diopter (D) lower than those of a clear lens. The effect of cooling time in combination with packing pressure is less consistent in this case, and thus the factor of cooling time has been tested again in parallel with mold and melt temperatures, taking into account prior knowledge from the test with the first insert.

Table 4 shows the parameters for mold and melt temperatures and cooling time for a second embodiment of the second example, the light filtering wafer 72 and optical thermoplastic material 74 being always the same as the ones of the first embodiment of the first example.

**Table 4**

| | Mold T (°F) | Melt T (°C) | Cooling Time (s) |
|---|---|---|---|
| 2-C1 | 265 | 270 | 275 |
| 2-C2 | 265 | 280 | 275 |
| 2-C3 | 275 | 280 | 300 |
| 2-C4 | 275 | 285 | 325 |

Unlike in the first embodiment of the second example, longer cooling drastically improves the optics in combination with higher mold and melt temperatures. Higher melt temperature better softens the light filtering wafer 72, while a hotter mold prevents the light filtering wafer 72 from stiffening and cooling down before the melt is able to shape the light filtering wafer. Longer cooling time improves optics as well, minimizing shrinkage of the light filtering wafer 72 from the temperature difference after the lens is taken out of the mold. With all the parameters extracted from each test, the sample C4 achieves microlens optics that were only 0.5D less than those of a clear lens.

In summary, based on the above test results, for aspherical microlens design such as the one with the second insert, the preferred process parameters for making a polarized myopia control lens (the optical article 78) using a PC/adhesive/PVA/adhesive/PC polar wafer (the light filtering wafer 72) are mold temperature ≥ 130°C, melt temperature ≥ 280°C, first stage packing pressure ≥ 90 bars, cooling time ≥ 275 seconds and wafer drying temperature ≤ 145°C. The packing pressure can be applied in either a single or multiple stages of pressure and time combination, therefore, the first stage packing pressure above-mentioned refers to a first stage of pressure of multiple stages of pressure to be applied. These process parameters give the best replication of the microstructures of the concave surface of the shaped portion 70a on the functional wafer 72 (thus obtaining microlenses 80 on the surface of the functional wafer 72) and retain the polarizing efficiency of the light filtering wafer 72.

Using a PC/TPU/PC photochromic wafer with the second insert, the preferred process parameters are similar to the ones of the polar wafer having mold temperature ≥ 130°C, melt temperature ≥ 270°C, first stage packing pressure ≥ 90 bars, cooling time ≥ 275 seconds, and wafer drying temperature ≤ 145°C. The melt temperature is 10°C lower than the one of the polar wafer because the thickness of the PC/TPU/PC photochromic wafer is about 0.1mm thinner than the PC/adhesive/PVA/adhesive/PC polar wafer. This specific adjustment of parameters gives an even higher replication of the microstructures of the concave surface of the shaped portion 70a on the functional wafer 72 (thus obtaining microlenses 80 on the surface of the functional wafer 72), with less than 0.13D difference from those of a clear lens and retain the photochromic performances of the light functional wafer 72.

In a third example, a PC/PC blue cut lens (the optical article 78) has been obtained using a 380µm thick PC blue cut wafer (the light filtering wafer 72) with the same aspheric insert and process conditions as the sample C4 in Table 4 of the second example. The PC blue cut wafer is a wafer comprising a polycarbonate layer containing a blue cut dye, which is a light filtering dye that partially blocks visible light in the 400-500 nanometers wavelength range, preferably in the 400-460 nanometers wavelength range. Therefore, in this example, the light filtering wafer 72 comprises a thermoplastic film layer comprising a light filtering dye. Alternatively, a UV cut dye, a color enhancement dye, a chronocut dye or a NIR cut dye film can be used instead of the blue cut dye. The resulting sample achieves excellent replication of the microstructures of the concave surface of the shaped portion 70a on the functional wafer 72 (thus obtaining microlenses 80 on the surface of the functional wafer 72) and retains the blue cut performances of the light functional wafer 72. The microlens optics are merely 0.1D lower than a clear lens, which demonstrates the preferred process parameters of the second example are applicable for a variety of light filtering wafers.

Figure 7 shows a cross-sectional view of a PC/PC blue cut lens (the optical article 78) having a PC substrate (the optical thermoplastic material 74) of 10mm, and a light filtering wafer 72 comprising a PC layer 100" of 380 µm having microlenses 80c on the outer surface.

Clearly, the principle of the invention remaining the same, the embodiments and details of production can be varied considerably from what has been described and illustrated purely by way of non-limiting example, without departing from the scope of protection of the present as defined in the attached claims.

## Claims

1. A method for manufacturing an optical article for controlling eye-length related disorders with light filtering functions comprising the steps of:
- providing (50) a mold (70) comprising a shaped portion (70a) having a concave micro-structured surface and a smooth portion (70b) having a smooth surface defining a cavity (73);
- inserting (52) a light filtering wafer (72) against the concave micro-structured surface (70a);
- injecting (56) an optical thermoplastic material (74) into the cavity (73) of the mold (70) via a filler (76), against a back surface of the light filtering wafer (72);
- applying a packing pressure via the filler (76) to force more optical thermoplastic material (74) into the mold (70) to compensate for a shrinkage of the optical thermoplastic material (74) during cooling;
- opening (58) the mold (70) after the optical thermoplastic material (74) is solidified, thus obtaining an optical article (78) having microstructures (80) on a front surface of the light filtering wafer (72).

2. The method of claim 1, wherein the light filtering wafer (72) comprises a thermoplastic layer and a light filtering layer.

3. The method of claim 2, wherein the light filtering layer is polyvinyl alcohol (PVA) or polyethylene terephthalate.

4. The method of claim 2, wherein the light filtering layer is thermoplastic polyurethane (TPU), polyether block amide (PEBA) or thermoplastic polyol adhesive.

5. The method of claim 1, wherein the light filtering wafer (72) comprises a thermoplastic layer comprising a light filtering dye.

6. The method of claim 5, wherein the light filtering dye is blue cut dye, UV cut dye, color enhancement dye, chronocut dye or NIR cut dye.

7. The method of claims 2 and 5, wherein the thermoplastic layer comprises a material selected from the group consisting of polycarbonate, isosorbide copolycarbonate, thermoplastic polyurethane, polyamide, copolyester, polymethyl methacrylate, methyl methacrylate copolymer, polyethylene terephthalate, polyester, polysulfone, polyphenylsulfone, polyetherimide, cyclic olefin copolymer, cyclic olefin polymer, cellulose triacetate, copolymers thereof, and mixtures thereof.

8. The method of any of the above claims, wherein the light filtering wafer (72) comprises a polarizing wafer, a photochromic wafer, a blue cut wafer, a UV cut wafer, a color enhancement wafer, a chronocut wafer or a NIR cut wafer.

9. The method of claim 1, wherein the optical thermoplastic material (74) is selected from the group consisting of polycarbonate, isosorbide copolycarbonate, thermoplastic polyurethane, polyamide, copolyester, polymethyl methacrylate, methyl methacrylate copolymer, polyethylene terephthalate, polyester, polysulfone, polyphenylsulfone, polyetherimide, cyclic olefin copolymer, cyclic olefin polymer, copolymers thereof, and mixtures thereof.

10. An optical article for controlling eye-length related disorders with light filtering functions manufactured according to a method for manufacturing an optical article for controlling eye-length related disorders with light filtering functions according to any of the claims 1 to 9.

11. The optical article of claim 10, wherein the optical article comprises at least one of a finished lens, a semi-finished lens, a wafer or a film.

12. The optical article of claim 11, designed for controlling myopia of an individual.

## Amended claims

### Amended claims in accordance with Rule 137(2) EPC.

1. A method for manufacturing an optical article for controlling eye-length related disorders with light filtering functions comprising the steps of:
- providing (50) a mold (70) comprising a shaped portion (70a) having a concave micro-structured surface and a smooth portion (70b) having a smooth surface defining a cavity (73);
- inserting (52) a light filtering wafer (72) against the concave micro-structured surface (70a);
- drying the light filtering wafer (72);
- injecting (56) an optical thermoplastic material (74) into the cavity (73) of the mold (70) via a filler (76), against a back surface of the light filtering wafer (72);
- applying a packing pressure via the filler (76) to force more optical thermoplastic material (74) into the mold (70) to compensate for a shrinkage of the optical thermoplastic material (74) during cooling;
- opening (58) the mold (70) after the optical thermoplastic material (74) is solidified, thus obtaining an optical article (78) having microstructures (80) on a front surface of the light filtering wafer (72).

2. The method of claim 1, wherein the light filtering wafer (72) comprises a thermoplastic layer and a light filtering layer.

3. The method of claim 2, wherein the light filtering layer is polyvinyl alcohol (PVA) or polyethylene terephthalate.

4. The method of claim 2, wherein the light filtering layer is thermoplastic polyurethane (TPU), polyether block amide (PEBA) or thermoplastic polyol adhesive.

5. The method of claim 1, wherein the light filtering wafer (72) comprises a thermoplastic layer comprising a light filtering dye.

6. The method of claim 5, wherein the light filtering dye is blue cut dye, UV cut dye, color enhancement dye, chronocut dye or NIR cut dye.

7. The method of claims 2 and 5, wherein the thermoplastic layer comprises a material selected from the group consisting of polycarbonate, isosorbide copolycarbonate, thermoplastic polyurethane, polyamide, copolyester, polymethyl methacrylate, methyl methacrylate copolymer, polyethylene terephthalate, polyester, polysulfone, polyphenylsulfone, polyetherimide, cyclic olefin copolymer, cyclic olefin polymer, cellulose triacetate, copolymers thereof, and mixtures thereof.

8. The method of any of the above claims, wherein the light filtering wafer (72) comprises a polarizing wafer, a photochromic wafer, a blue cut wafer, a UV cut wafer, a color enhancement wafer, a chronocut wafer or a NIR cut wafer.

9. The method of claim 1, wherein the optical thermoplastic material (74) is selected from the group consisting of polycarbonate, isosorbide copolycarbonate, thermoplastic polyurethane, polyamide, copolyester, polymethyl methacrylate, methyl methacrylate copolymer, polyethylene terephthalate, polyester, polysulfone, polyphenylsulfone, polyetherimide, cyclic olefin copolymer, cyclic olefin polymer, copolymers thereof, and mixtures thereof.

10. An optical article for controlling eye-length related disorders with light filtering functions manufactured according to a method for manufacturing an optical article for controlling eye-length related disorders with light filtering functions according to any of the claims 1 to 9.

11. The optical article of claim 10, wherein the optical article comprises at least one of a finished lens, a semi-finished lens, a wafer or a film.

12. The optical article of claim 11, designed for controlling myopia of an individual.
